# NEUE EUROPÄISCHE PATENTSCHRIFT

(11) **EP 1 916 914 B2**
(45) Veröffentlichungstag und Bekanntmachung des Hinweises auf die Entscheidung über den Einspruch: **08.08.2018**
(45) Hinweis auf die Patenterteilung: 20.10.2010
(21) Anmeldenummer: 06776622.0
(22) Anmeldetag: 04.08.2006
(51) Int. Cl.: A23L 2/04, A23L 2/02, A23N 1/02, B02C 23/18

(54) **VERFAHREN UND VORRICHTUNG ZUR HERSTELLUNG VON FRUCHT- ODER GEMÜSESAFT**
METHOD AND DEVICE FOR THE PRODUCTION OF FRUIT JUICE OR VEGETABLE JUICE
PROCEDE ET DISPOSITIF DE FABRICATION DE JUS DE FRUITS OU DE LEGUMES

(30) Priorität: 05.08.2005 DE 102005037005
(43) Veröffentlichungstag der Anmeldung: 07.05.2008
(73) Patentinhaber: Mohr, Kurt, 74595 Langenburg (DE)
(72) Erfinder: Mohr, Kurt, 74595 Langenburg (DE)
(74) Vertreter: Prüfer & Partner mbB Patentanwälte · Rechtsanwälte
(86) Internationale Anmeldenummer: PCT/EP2006/007751
(87) Internationale Veröffentlichungsnummer: WO 2007/017200

(56) Entgegenhaltungen:
- EP-A- 0 172 809
- EP-A- 0 457 062
- EP-A1- 0 343 469
- EP-A1- 1 107 000
- EP-A2- 0 282 991
- EP-A2- 0 301 956
- WO-A-2005/070234
- WO-A1-01/84965
- WO-A1-92/03067
- DE-A1- 2 059 522
- DE-A1- 3 243 105
- DE-A1- 3 515 481
- DE-A1- 3 517 886
- DE-A1- 4 122 634
- DE-C2- 3 228 074
- DE-U1-202004 015 801
- US-A- 3 714 887
- US-A- 4 139 647
- US-A- 4 716 044
- US-A- 4 957 043
- FERRARINI R ET AL: "NEW PROCESSES FOR PRODUCTION OF LIMPID APPLE JUICE" FRUIT PROCESSING, SCHOENBORN, DE, Bd. 7, Nr. 5, 1997, Seiten 171-179, XP002054829 ISSN: 0939-4435
- FLÜSSIGES OBST: 'Trubstabile "naturtrübe" Apfelsäfte - Herstellungstechnologie und Rohwareneinfluss" Heft 1/96' Seiten 11 - 15
- FLÜSSIGES OBST: '"Neue Ansätze zur Charakterisierung und Herstellung naturtrüber Fruchtsäfte" Heft 1/2000' Seiten 19 - 31
- ULRICH SCHOBINGER,: 'Handbuch der Lebensmitteltechnologie, 3. Auflage, Ausgabe 200 (ISBN) 3-801-5821-3) Seiten 106 bis 107-107, 122-124, 148-150, 159-162'
- DR. J. HAMATSCHEK ET AL: 'Separatoren und Dekanter für die Herstellung von Frucht- und Gemüsesäften Zweite Auflage 2004'

## Beschreibung

Die vorliegende Erfindung betrifft Verfahren und Vorrichtungen zur Herstellung von Frucht- oder Gemüsesaft. Die Verfahren und Vorrichtungen sind für Früchte, Obst, Gemüse und Feldfrüchte unterschiedlichster Arten gleichermaßen geeignet, so daß im folgenden für das zu Saft zu verarbeitende Material allgemein der synonyme Ausdruck "Frucht" verwendet wird.

Herkömmliche Verfahren und Vorrichtungen zur Herstellung von Fruchtsaft schließen gewöhnlich das Zerkleinern der Frucht, z.B. in einer Mühle, zum Bilden einer Fruchtmaische und das Trennen der Fruchtmaische in Fruchtsaft und festem Fruchtrückstand in einer Trenneinrichtung wie einem Dekanter, einer Zentrifuge oder einer Presse ein, wonach der gewünschte, abgetrennte Fruchtsaft aufgefangen wird.

Ein Verfahren zur Gewinnung von naturtrüben Frucht- und Gemüsesäften ist z.B. aus der DE 41 22 634 A1 bekannt. Dort wird die Fruchtmaische zeitlich unmittelbar nach dem Zerkleinern der Früchte einer Vollmantel-Schneckenzentrifuge zum Trennen von Fruchtsaft und Fruchtfleisch zugeführt, und unmittelbar danach wird eine Inaktivierung fruchteigener pektolytischer Enzyme und Polyphenoloxidasen durch Erhitzung des aus der Vollmantel-Schneckenzentrifuge ablaufenden Saftes durchgeführt. Die Abtrennung der unlöslichen Fruchtfleischteile der Maische in der Vollmantel-Schneckenzentrifuge kann unter Schutzgas erfolgen, und nach der Trennung in der Vollmantel-Schneckenzentrifuge und der Erhitzung oder während der Erhitzung des Fruchtsaftes kann eine kontinuierliche Entgasung erfolgen, was Oxidationsreaktionen verringern soll.

Die EP 0 343 469 A1 beschreibt Verfahren und Vorrichtungen zur Saftgewinnung, wobei vor dem Eintreten einer Reaktion von Fruchtpektin mit Sauerstoff die Maische einem kontinuierlichen Zentrifugierverfahren unterzogen wird und anschließend die dabei abgetrennte flüssige Phase von auf der flüssigen Phase flottierenden Schaumbestandteilen, die Pektinbestandteile binden, weiter mechanisch getrennt wird. Die doppelten Trennschritte an der Maische erfolgten nach Eintritt der Maische in eine Filterzentrifuge. In diese Filterzentrifuge wird Luft und/oder Inertgas eingeleitet, was dazu verhilft, daß Rohsaft durch Sieböffnungen hindurchtritt, während feste Bestandteile an den Sieböffnungen vorbei abgeleitet werden. Darauf folgend wird der Rohsaft an einer schrägen Siebfläche eines Schüttelsiebs in Natursaft und den darauf flottierenden Schaum, der Pektine enthält, getrennt.

US 4,957,043 offenbart Verfahren und Anlage zum Aufbrechen und zur Safterzeugung von Früchten. Früchte werden über eine Zellenradschleuse einer Fliehkraft-Wurfeinrichtung zugeführt, mit dessen Hilfe die Früchte in erhöhter Geschwindigkeit gegen ein Prallblech geschleudert und dadurch zertrümmert werden. Wahlweise kann an den Behälter, der das Prallblech beinhaltet, Unterdruck angelegt werden, oder es wird Dampf oder Inertgas in den Behälter eingeführt.

Ferner sind aus der EP 0 282 991 A2 Verfahren und Anlage zum Mahlen von Früchten und Gemüse bekannt, wobei das Material wiederum durch eine Schleuse eingebracht und einer Mühle zum Feinzerkleinern/Mahlen zugeführt wird. Vor dem Eintritt in die Mühle erfolgt die Zuleitung von heißem Medium in Form eines Dampfs oder eines inaktiven erhitzten Gases.

Die bekannten Verfahren und Vorrichtungen zur Herstellung von Frucht- oder Gemüsesaft weisen jedoch nach wie vor Nachteile in Hinblick auf Qualität und natürlicher Reinheit des daraus gewonnenen Fruchtsafts auf.

Aufgabe der vorliegenden Erfindung war es daher, herkömmliche Verfahren und Vorrichtungen zur Herstellung von Frucht- oder Gemüsesaft hinsichtlich Qualität und Naturreinheit zu verbessern.

Die Aufgabe wird erfindungsgemäß durch Verfahren und Anlagen gemäß den beiliegenden unabhängigen Ansprüchen gelöst. Bevorzugte Ausführungsformen der erfindungsgemäßen Verfahren bzw. Anlagen sind in den Unteransprüchen festgelegt.

Die erfindungsgemäßen Verfahren und Vorrichtungen weisen das gemeinsame Lösungskonzept auf, die natürlichen Eigenschaften der zu verarbeitenden Frucht im Hinblick auf Qualität, Naturreinheit, Geschmack und möglichst naturbelassenen Inhaltsstoffen besonders gut zu erhalten. Der beeinträchtigende Einfluß nachteiliger Faktoren wird von vorneherein minimiert. Probleme, die aus Reaktionen mit Sauerstoff resultieren, werden nicht in Kauf genommen, sondern treten durch die erfindungsgemäßen Lösungen erst gar nicht auf. Die in den Unteransprüchen festgelegten bevorzugten Ausführungsformen tragen jeweils einzeln oder in Kombination zur Lösung der erfindungsgemäßen Aufgabe und-zur Vermeidung der Entstehung von Problemen weiter bei.

Bei der Ausführung der Erfindung gemäß der Ansprüchen 1 und 8 wird ein Eintrag von Luft bereits beim Bilden der Fruchtmaische minimiert, d.h. bevor die Trennung von Fruchtsaft und festem Fruchtrückstand erfolgt. Denn bei der Trennung von Fruchtsaft und festem Fruchtrückstand, z.B. in einer Zentrifuge, einem Dekanter, einer Presse, einem Filtrier- oder einem Extraktionsapparat, läßt sich Luft nur ungenügend von einem Inert-Schutzgas verdrängen, und einmal in ein geschlossenes System eingebrachte Luft oder aus der Frucht stammende, sauerstoffhaltige gasförmige Bestandteile vermengen sich gerade bei der Maischebildung innig und homogen mit dem Fruchtmaterial. Zudem ist es erfindungsgemäß mögliche, sogar die aus dem Fruchtmaterial selbst stammende, sauerstoffhaltige Gasbildung zu entfernen.

Es ist von Vorteil, wenn die Frucht vor der Feinzerkleinerung grob vorab zerkleinert wird. Das später zur Fruchtmaische fein zermahlene Fruchtmaterial läßt sich in diesem vorzerkleinerten Zustand besser von einem Inertgas als Schutzgas umhüllen. Erfindungsgemäß wird im gesamten System bereits früh eine Art Luftschleuse und ein Austausch von Luft zu Inertgas gebildet. Das Schutzgas verhindern eine Bräunung durch Oxidation bereits bei den grob zerkleinerten. Früchten. Bei der Grobzerkleinerung wird die Frucht in zehn oder weniger, vorzugsweise acht oder weniger und weiter bevorzugte vier oder weniger Teile geteilt. Eine vorteilhafte Grobzerkleinerungseorrichtung, die gleichzeitig eine Schneid- und Fö,rderfunktion aufweist, ist z.B. eine Exiente.r-Schneckenpumpe bzw. Monopumpe.

Die erfindungsgemäßen Wirkungen sind bei den Ausführungen gemäß den Ansprüchen 2 und 8 besonders effizient zu verwirklichen.

Bei der bevorzugten Ausführungsform gemäß Anspruch 3 und 9 ist es möglich, selbst die schwer zu entfernenden, fruchteigenen und potentiell Sauerstoff enthaltenden Gasbestandteile abzuziehen und wirksam zu entfernen. Ein räumliches Verteilen der Fruchtmaische bei gleichzeitiger Unterdruckbehandlung kann zum Beispiel durch ein Versprühen, ein räumliches Ablenken, ein Abfließen der Maische über ein kegelförmiges oder tellerförmiges oder schirmartiges Element in einem geeigneten Behälter, an den Unterdruck angelegt wird, erfolgen. Zum Beispiel kann die Maische einen Fallturm bestimmter Länge, z.B. von 1 bis 15 m, vorzugsweise 2 bis 12 m und insbesondere 7,5 bis 11 m Länge durch ihr Eigengewicht von oben nach unten fallengelassen werden, um den Unterdruck in ausreichender Zeit auf die homogen verteilte Maische wirken zu lassen. Zur Unterdruckbehandlung wird die Fruchtmaische geeigneterweise im oberen Bereich eines Unterdruckbehalters eingeführt, in dem, z.B. über eine Vakuumpumpe, ein passender-Unterdruck eingestellt wird. Als besonders geeigneter Unterdruck hat sich ein Bereich von 0,2 bis 0,7 bar (0,2 x 10⁵ bis 0,7 x 10⁵ Pa), und insbesondere ein Bereich von 0,3 bis 0,5 bar (0,35 x 10⁵ bis 0,5 x 10⁵ Pa) erwiesen. Wenn die Größe der Fruchtbestandteile der Maische auf durchschnittlich 0,2 bis 3 mm, vorzugsweise 0,5 bis 2,5 mm, und insbesondere auf 0,75 bis 1,5 mm durch entsprechende Einstellung der Mäischezerkleinerungsvorrichtung, voreingestellt wird, und wenn.in einer solchen Maische im vorstehend definierten Vakuum eine räumliche Verteilung eingestellt wird, ergibt sich in dem Fallturm passender Länge eine feine Verteilung des Fruchtmaterials, aus dem jegliche Sauerstoffreste besonders wirksam entfernt werden können.

Dadurch dass die Evakuierungsvorrichtung stromaufwärts, ggf. über Leitungsverbindungen oder unmittelbar ohne Zwischenleitungen, mit dem Maische-Zerkleinerer und sogar bis zur Vorzerkleinerungsvorrichtung in einem geschlossenen System verbunden ist, ist das System derart eingerichtet, daß im gesamten System von dem Maische-Zerkleinerer und von der Ausgangsseite der Vorzerkleinerungsvorrichtung bis zur. Evakuierungsvorrichtung Unterdruck herrscht. Vor allem in Kombination mit der Inertgaszufuhr an der Eingangsseite der Vorzerkleinergngsvorrichtung wird ein praktisch sauerstofffreier Zustand erhalten, noch bevor in dem stromabwärtigen, weiterhin geschlossenen System die Trennung von Fruchtsaft und festem Fruchtrückstand in einer geeigneten Trenneinrichtung erfolgt.

Gemäß einer Weiterbildung nach den Ansprüchen 4 und 11 können flüchtige Fruchtbestandteile wie z.B. Aromastoffe, die möglicherweise über das Vakuum mit abgezogen wurden, wieder aufgefangen und in das System zurückgeführt werden.

Gemäß der bevorzugten Ausführungsform nach Anspruch 5 und 12 werden nachteilige. Enzymreaktionen noch stärker unterdrückt, und der naturbelassene Zustand des Fruchtmaterials bleibt noch besser erhalten.

Durch die Weiterbildung gemäß Anspruch 6 und 13 werden nicht nur naturfremde Stoffe weiter aufgeschlossen, sondern auch eine bessere vorkonditionierung der zu verarbeitenden Frucht für die erfindungsgemäße Wirkungsweise erhalten.

Durch die Arbeitsweise gemäß Anspruch 7 wird ein permanenter Stromdurchfluß des Fruchtmaterials gewährleistet. So wird die Wahrscheinlichkeit weiter reduziert, daß während eines Stillstands des Betriebs, der zum Beispiel aus einem ungenügenden oder fehlende Nachschub von Fruchtmaterial oder durch unkontrollierte Koordination der im Rahmen des Verfahrens involvierten Einrichtungen resultieren kann, beseitigt. Herkömmlich waren, um solche Stillstandszeiten zu überbrücken, häufig Puffertanks oder Pufferresexvieren zum Nachschieben von Fruchtmaterial vorgesehen. Das erfindungsgemäße Verfahren kann durchgeführt werden, ohne daß Puffertanks oder Pufferreserven notwendig wären.

Die Anlage kann durch das Vorsehen einer Steuerungseinrichtung, die eine oder mehrere kritische Einrichtungen steuert, und durch Beachtung von als kritisch befundenen Faktoren dafür sorgen, daß ein Stillstand des Mastexialdurchsatzes durch die problematischen Teile der Anlage vermieden werden kann. Anstelle von nur An/Aus-Zuständen können an ausgewählten oder an allen Einrichtungen der Vorherkleinerungsvorrichtung, der Maische-Zerkleinerungsvorrichtung und der Trennvorrichtung eine mehrstufig oder eine stufenlos variable Regelung zur gezielten Einstellung des jeweiliegen Materialdurchsatzes bei den Einrichtungen untereinander abgestimmt werden. Materialstau rund -stillstand können vermieden werden und die Folgen von Ungleichmäßigkeiten des Fruchtmateriales können beseitigt werden. Nach dieser bevorzugten Ausführungsform ist ein stillstandsloser Betrieb auch ohne Puffertank oder Pufferreserve möglich.

Es hat sich gezeigt, daß ein sehr nahe an die natürliche Qualität und den natürlichen Geschmack herabreichende Natursaftgewinnung durch herkömmliche Anlagen mit Zerkleinerern wie Mühlen, und Trenneinrichtungen wie Zentrifugen, Dekanter, Pressen oder dergl. alleine nicht vollständig erreicht werden kann, durch wahlweise Anwendung einer zusätzliche Zellausschlußbehandlung jedoch noch verbessert werden kann. Bei Anwendung nach dem Bilden der Fruchtmaische und vor der Trennung von Fruchtmaische in Fruchtsaft und festem Fruchtrückstand mittels z.B. Zentrifuge, Dekanter oder Presse kann durch Anwendung der Zellaufschlußbehandlung der Gehalt an fruchteigenen Inhaltsstoffen und deren Gewinnung für den erwünschten Fruchtsaft nochmals deutlich gesteigert werden. Zu diesem Zweck sind besonders geeignet die Anwendung von Homogenisatoren, insbesondere Hochdruck-Homogenisatoren, oder Hochdruck/Kaskadenentspannungs-Geräte, bei denen von Drücken von z.B.>200 bar über Ventile plötzlich auf Normaldruck entspanne wird. Ferner sind geeignet hochtourige Kugelmühlen und Ultraschallanwendungen. Ferner sind elektrische Behandlungen der maische, wobei die Maische zwischen Elektroden, die ggf. durch Oberflächenbehandlung inert gemacht werden können, einem elektrischen Feld unterzogen wird, sowie magnetische Behandlungen der Maische in einem Magnetfeld geeignet. Falls gewünsche kann eine Kühlung bei der Zellaufschlußbehandlung eine Erwärmung durch den Energieeintrag kompensieren.

Die Zellaufschlußbehändlung kann nach dem Zerkleinern der Frucht zum Bilden einer Fruchtmaische angewandt werden. Alternativ kann zu diesem Zweck eine Fruchtmaische bereitgestellt werden, indem ein zuvor aus der Dikrektfruchtsaft-Herstellung gewonnener Trester in wäßrigem Medium dispergiert wird und einer Extraktion mit gleichzeitiger oder anschließender Zellaufschlußbehandiung unterzogen wird.

Eine Zellaufschlußbehandlung kann insbesondere in Kombination mit der oben beschriebenen Ausführungsform des erfindungsgemäßen Verfahrens bzw. der erfindungsgemäßen Anlage angewendet werden. Durch die entsprechende Voranwendung zur Umgebung des Fruchtmaterial durch ein Schutzgas und/oder durch Evakuierung fruchteigener, sauerstoffhaltiger Gase ist es nämlich möglich, die erhöhte Gefahr von Oxidatiorisreaktionen durch Enzyme aus dem Zellaufschluß weitgehend oder sogar vollständig zu unterbinden.

Bei einem kombinierten Verfahren einer Direktsafterzeugung und einer anschließenden Tresterextraktion wird nicht nur die Gewinnung eines besonders frischen und naturnahen Direktsafts, sondern zusätzlich die Gewinnung weiterer wertvolle Bestandteile aus dem festen Fruchtrückstand ermöglicht; Die beiden unterschiedlichen Stufe der Direktsafterzeugung und der Trester-Extraktion verlaufen dann sozusagen konträr zueinander, um die für die jeweilige Stufe optimalen Bedingungen anzuwenden. Die erste Stufe der Direktsafterzeugung kann wiederum vorteilhaft wie in der oben beschriebenen Ausführungsform der Erfindung durchgeführt werden. Eine zusätzliche Zellaufschlußbehandlung kann sowohl bei der Direktsafterzeugung als auch bei der anschließenden Tresterextraktion wahlweise angewandt werden.

Weitere vorteilhafte Bedingungen für die Tresterextraktion sind: Bedingungen eines sauren pH-Werts und/oder eines mechanischen Rührens der Extraktionsmasse. Die erfindungsgemäße Direktsafterzeugung unter Sauerstoffausschluß und mit Schutzgasatmosphäre sollte vom Zeitpunkt der Zerkleinerung des Fruchtmaterials bis zum Abtrennen und Auffangen des Fruchtsafts möglichst schnell ablaufen. Geeignet sind Zeiten von maximal 5 Min., vorzugsweise maximal 3 Min. Eine anschließende Tresterextraktion andererseits sollte zur ausreichenden Einwirkung durch Enzyme und ggf. vorhandene Mikroorganismen für eine minimal Dauer von etwa 2 h, beispielsweise 2 bis 10 h ablaufen.

Ein weiteres Merkmal des erfindungsgemäßen Direktsaftverfahrens besteht darin, daß es im kontinuierlichen Betrieb durchgeführt werden kann. Im Gegensatz dazu ist es von Vorteil, Wenn eine anschließende Tresterextraktion in diskontinuierlichem Batchbetrieb durchgeführt wird.

Es wird dafür gesorgt, daß genau in einem kritischen Abschnitt der Anlage, nämlich beginnend bereits im Zerkleinerungsvorrichtung zum Bilden der Fruchtmaische (z.B. einer Mühle oder einem Thermobreaktank) und durchgehend bis zum Abtrennen des gewünschten Fruchtsafts, ein gegenüber der Außenluft abgeschlossenes System, welches ggf. passende Rohrverbindungen zwischen den einzelnen Behandlungseinrichtungen vorsieht, gebildet wird und sehr wirksam unter

Schutzgas gesetzt werden kann. Das Zuleiten von Inertgas bei der Eingangsseite einer Vorzerkleinerungsvorrichtung, die gleichzeitig eine Förder- oder Pumpfunktion zum Fördern des Fruchtmaterials aufweist, hat sich hierbei als eine optimale Stelle erwiesen, um das gegenüber Außenluft abgeschossene System unter Schutzgas zu setzen. Ergänzend kann eine Inertgaszuleitung an der Eingangsseite eines gegenüber Außenluft geschlossenen Maische-Zerkleinerungsapparats vorgesehen werden.

Der nach den oben beschriebenen, verschiedenen Ausführungsformmen der Erfindung gewonnene Fruchtsafts kann je nach Wunsch direkt abgefüllt werden, z.B. in Flaschen, beschichtete Kartons, Container oder Dosen, oder er kann wahlweise weiteren, an sich bekannten Behandlungsschritten unterzogen werden, wie z.B. :einer Homogenisierung, einer Filtrierung für Klarsaft, einer Erhitzungs- oder Pasteurisierungsbehandlung, einem Zusatz gewünschter Stoffe, etwa von Vitaminen und/oder - für lang lagerfähige Erzeugnisse - Konsetvierug-gsstoffen, order dergleichen. Aufgrund der Naturfrische erhaltenden und der natürlichen Qualität besonders nahe kommenden Gewinnung von Fruchtsaft ist die Erfindung insbesondere auf naturtrüben Frucht- und Gemüsesäfte anwendbar. Besonders vorteilhaft ist die Hersellung von naturtrübem Apfelsaft. Die Vorteile der Erfindung sind gleichfalls erzielbar bei anderen Früchten, d.h. verschiedener Sorten Obst; Gemüse oder Feldfrüchte, wie z.B. Orangen, Weintrauben, Johannisbeeren, Kirschen, Ananas, Birnen, Erdbeeren, Pflaumen, Aprikose, Banane, Kiwi, Karotte, Tomate, Kartoffeln, Mais, und dergleichen. Durch die Ausführungen der erfindungsgemäßen Verfahren und Anlagen können nicht nur die gewünschten Fruchtsäfte, sondern auch feste Fruchtrückstände wie Cellulose, oder gasförmige Nebenprodukte in Form von Biogas verwendet und ggf. weiterverarbeitet werden.

Die vorliegende Erfindung, vorteilhafte Ausführungsformen und weitere Merkmale und Vorteile werden nachfolgend unter Bezugnahme auf Zeichnungen, die jedoch nicht einschränkend zu verstehen sind, näher erläutert.
- Fig. 1: zeigt schematisch eine Ausführungsform einer erfindungsgemäßen Anlage bzw. eines erfindungsgemäßen Verfahrens zur Herstellung von Fruchtsaft;
- Fig. 2: zeigt schematisch eine bevorzugte Ausführungsform einer Evakuierungsvorrichtung, die auf das Verfahren und die Anlage gemäß der Erfindung anwendbar ist;
- Fig. 3: zeigt schematisch ein Beispiel einer Anwendung einer Zellaufschlußvorrichtung gemäß einer weiteren Ausführungsform der Erfindung;
- Fig. 4: zeigt schematisch eine mögliche Kombination aus Direktsafterzeugung und Tresterextraktion gemäß einer weiteren Ausführungsform der Erfindung; und
- Fig. 5: zeigt schematisch ein Beispiel einer weiteren erfin- dungsgemäßen Ausführungsform einer Anlage, auf die eine Steuerungseinrichtung für einen kontinuierli- chen Betrieb ohne Stillstand eines Materialdurchsat- zes angewendet wird.

Bei Fig. 1 werden Früchte bei 110 in einen Auffang- und/oder Vorratsbehälter 10 eingebracht. Die Früchte werden über eine Leitung oder ein Band 101 in eine Waschanlage 20 befördert, in welcher sie zuerst im Bereich 21 gewaschen und anschließend im Bereich 22 getrocknet werden. Bereits hier kann eine günstige Vorkonditionierung der Früchte erhalten werden, indem die Trocknung durch Vakuumabsaugung durchgeführt wird. Die Früchte gelangen dann durch eine Leitung 102 zur Vorzerkleinerungsvorrichtung 30. Zwischen Waschanlage 20 und Vorzerkleinerungsvorrichtung 30, im Bereich der Leitung 102, ist eine Kühleinrichtung 25 zum Kühlen der beförderten Früchte vorgesehen. Die Vorzerkleinerungsvorrichtung 30 ist hier in Form einer Exzenter-Schneckenpumpe ausgeführt, die gleichzeitig eine Funktion zum groben Vorzerkleinern und eine Funktion zum Fördern bzw. Pumpen des Fruchtmaterials aufweist. Der bei der groben Vorzerkleinerung erhaltene Fruchtsaft kann vorteilhaft dem Waschwasser der Waschanlage 20 zugesetzt werden, um die Früchte weiter vorteilhaft vorzukonditionieren. Bei der stromaufwärtigen Eingangsseite 30a der Vorzerkleinerungsvorrichtung 30 ist eine Inertgas-Zuleitung 31 vorgesehen, mit der Hilfe das gesamte anschließende Anlagensystem bis zur Trennvorrichtung 90 und ggf. weiter bis zum Abtrennen des gewünschten Fruchtsafts 130 unter Schutzgas zu stellen. Als Inertgas wird vorzugsweise Stickstoff verwendet, alternativ CO₂ oder eine Mischung N₂/CO₂, oder andere geeignete Inertgase. Ein besonders effizienter Ausschluß von unerwünschtem Lufteintrag wird erreicht, wenn bei der Vorzerkleinerungsvorrichtung direkt nach der Zutrittsöffnung 30a mittels Inertgas-Überdruck eine gewisse Druckschleuse bzw. ein Schutzwall erzeugt wird, und wenn zusätzlich durch einen direkt anschließenden Rotor ein Gaszutritt weiter reduziert wird. Diese Wirkungen, kombiniert mit einem bis an diese Stelle zurückreichenden, durch die Evakuierungsvorrichtungen 60, 70 erzeugten Unterdruck ergeben eine besonders vorteilhafte, sauerstoffbefreite Schutzgasatmosphäre.

Nach dem Austritt bei 30b der durch die Vorzerkleinerungsvorrichtung 30 z.B. auf durchschnittlich ca. 4 Teile geteilten Früchte werden diese durch die Leitung 103 weiterbefördert. Im Verlauf des Bereichs 40 werden mit Faulstellen behaftete Teile der Früchte erfaßt und aus dem weiter zu verarbeitenden Früchtematerial entfernt. Die grob zerteilten Früchte werden einer nach außen geschlossenen Mühle 50 zugeleitet, in der eine Feinzerkleinerung der Früchte zum Bilden einer Fruchtmaische erfolgt. Durch eine weitere Zuleitung 51 kann ggf. zusätzliches Inertgas zugeleitet werden, falls dies gewünscht ist. Die gemahlene Maische weist je nach Fruchtart eine variable Teilchengröße auf. Im Fall des Mahlens von Äpfeln liegt die Teilchengröße geeigneterweise im Bereich von wenigen Millimetern, beispielsweise im Bereich von ca. 0,1 bis 5 mm, vorzugsweise von ca. 0,5 bis 3 mm und insbesondere von ca. 0,5 bis 2 mm. Die Maische wird durch die Leitung 104 einem Behälter 60 zugeleitet, in dessen Innerem über eine durch die Leitung 105 verbundene Vakuumpumpe 70 ein Unterdruck angelegt wird. Die Fruchtmaische fällt durch das Eigengewicht in im wesentlichen nach unten gerichteter Richtung von der oberen Eintrittsseite zum Boden des Behälters 60. Im Verlauf der Fallhöhe von ca. 1 bis 20 m, vorzugsweise 5 bis 15 m und weiter bevorzugt 7,5 bis 12,5 m wirkt das erzeugte Vakuum auf die im Behälter verteilten Maischeteilchen. Gasförmige Bestandteile können durch die Ableitung 120 abgeleitet werden. Eine mögliche bevorzugte Ausführungsform der Evakuierungsvorrichtung wird später im Zusammenhang mit Fig. 2 näher erläutert.

Nach Ableitung der so behandelten Fruchtmaische durch die Ableitung 106 wird die so behandelte Fruchtmaische über eine Pumpe 80 weiter gefördert, die als Monopumpe ausgestaltet sein kann und mit deren Hilfe der stromaufwärtsseitige Unterdruck wieder auf Normal-Atmosphärendruck von etwa 1 bar gebracht wird, jedoch nach wie vor unter Schutzgas. Danach erreicht das so behandelte Fruchtmaterial durch die Leitung 107 die Trenneinrichtung 90, zum Beispiel eine Presse, eine Zentrifuge oder eine alternative Dekanter-Trenneinrichtung. In dieser Trenneinrichtung wird, weiter unter Schutzgas und nach der Evakuierung sauerstoffhaltiger Gase, die Trennung von Fruchtsaft 130, der durch die Leitung 108 abgeleitet, ggf. weiter behandelt oder direkt in Form eines naturtrüben Safts vorzugsweise weiterhin unter Schutzgas - abgefüllt wird, und in festen Fruchtrückstand 140, der durch Leitung 109 abgeleitet wird, durchgeführt.

Fig. 2 zeigt eine bevorzugte Ausführungsform einer erfindungsgemäß einsetzbaren Evakuierungsvorrichtung. Diese Evakuierungsvorrichtung schließt einen zylindrischen Behälter 60A und eine Vakuumpumpe 70A ein und kann zwischen einer Fruchtmaische-Mühle und einer Trennvorrichtung zum Trennen von Fruchtsaft und festem Fruchtrückstand eingebaut werden. Die Evakuierungsvorrichtung ist auf das in Fig. 1 dargestellte System anwendbar, oder sie kann unabhängig davon in eine andere Herstellungsanlage eingebaut werden. Bei der besonderen, in Fig. 2 dargestellten Ausführungsform ist die Mühle zur Bildung von Fruchtmaische 50A direkt und luftdicht auf dem Behälter 60A montiert, so daß das durch die Leitung 103A eintretende Fruchtmaterial 110A, das wahlweise ganze oder grob zerkleinerte Früchte enthält, nach dem Malen in der Mühle 50A direkt in den nach außen geschlossenen Vakuumbehälter 60A eintritt und sich im Inneren des Behälters, unterstützt durch einen Ablenkungsschirm 65, fein verteilt. Aus der fein verteilten Maische 250 werden die durch die Unterdruckbehandlung erzeugten flüchtigen und gasförmigen Bestandteile 235 in Richtung Vakuumpumpe 70A aus den Behälter 60A abgezogen. Flüchtige Naturstoffbestandteile wie z.B. Aromastoffe, die mit abgezogen wurden, können in einem Gaskondensierer 75 an einer Kühlplatte 76 kondensiert und in Form flüssiger Bestandteile 240 über das Rücklaufrohr 236 wieder in das zu gewinnende Fruchtmaterial zurückgeführt werden. Rein gasförmige Bestandteile 220 können durch eine Ableitung abgeführt und ggf. einer weiteren Nutzung zugeführt werden. Am unteren Ende des Vakuumbehälters 60A wird die so behandelte Fruchtmaische gesammelt und, entweder über eine Zwischenleitung oder direkt im Anschluß daran, über eine Monopumpe 80A, die gleichzeitig den stromaufwärtsseitigen Unterdruck in einen stromabwärtsseitigen Normaldruck umwandelt, über die Leitung 107A weiterleitet. Über eine hier nicht dargestellte Trenneinrichtung zum Trennen von Fruchtsaft und festem Fruchtrückstand wird schließlich der gewünschte Fruchtsaft 130A aufgefangen.

In der erfindungsgemäßen Ausführungsform gemäß Fig. 3 wird ein zu behandelndes Fruchtmaterial 110B, welches wahlweise in ganzen Stücken oder grob zerkleinert vorliegt, über die Leitung 103B in eine Mühle 50B zur Bildung einer Fruchtmaische eingeführt. Nach dem Austritt der so gebildeten Fruchtmaische durch die Leitung 104B erfolgt in einer Zellaufschlußvorrichtung 300, hier in Form eines Hochdruck-Homogenisierers, ein zusätzlicher Zellaufschluß zur Gewinnung eines hohen Gehalts weiterer Zellinhaltsstoffe aus der Fruchtmaische. Bei Kombination mit der in Fig. 1 und/oder mit der in Fig. 2 gezeigten Ausführungsform wird zusätzlich für Luftausschluß, Sauerstofffreiheit und/oder Schutzgasatmosphäre gesorgt. Das danach vollstähndig aufgeschlossene Fruchtmaterial wird durch die Leitung 107B wie beschrieben einer Trennvorrichtung zum Trennen des gewünschten Fruchtsafts 130B (über die Ableitung 108B) und einem festen Fruchtrückstand 140B (über die Ableitung 109B) getrennt.

Die Fig. 4 veranschaulicht an einem Ausführungsbeispiel eine Kombination aus Direktsaftherstellung und Tresterextraktion. Die Direktsaftherstellung zur Gewinnung des Fruchtsafts 130C erfolgt im kontinuierlichen Betrieb, wobei die in den oben beschriebenen Ausführungsformen verwendeten Verfahren und Anlagen und speziell die in Fig. 1 bis 3 gezeigten Ausführungsformen oder die in Fig. 4 gezeigte Ausführungsform, die eine nach außen dicht verschlossene Maische-Mühle 50C mit einer Inertgas-Zuleitung 51, eine Evakuierungsvorrichtung mit Vakuumbehälter 60C und Vakuumpumpe 70C sowie eine Trennvorrichtung, z.B. eine Presse 90C, einschließt, angewandt werden können. Der aus den festen Fruchtrückständen der Presse 90C gewonnene Trester wird einem separaten Behälter 200 zugeführt, um eine diskontinuierliche, also in Batch-Arbeitsweise durchgeführten Tresterextraktion zur Gewinnung einer zweiten Fruchtmaische ablaufen zu lassen. Die zweite Fruchtmaische wird anschließend wiederum in einer Trenneinrichtung, hier einer Presse 90D, in einen zweiten Fruchtsaft und einen zweiten festen Fruchtrückstand getrennt. Anders als bei der Direktsafterzeugung in der ersten Stufe, die bei diesem Beispiel unter Sauerstoffausschluß und Schutzgasatmosphäre, ohne Zusatz von Enzymen und ggf. ohne weitere Zusätze wie Vitamin C und wahlweise unter Kühlen des Fruchtmaterials durchgeführt wird, erfolgt die anschließende Tresterextraktion im separaten Behälter 200 in Gegenwart von Luft oder Sauerstoff unter Zusatz von Enzymen und ggf. weiteren Zusätzen wie Vitamin C, Zukker oder weiterer Nährstoffzusätzen, sowie bei Temperaturen von mindestens 40°C, vorzugsweise mindestens 45°C und z.B. um 50°C. Zur Intensivierung der Extraktion wird bei Zugabe des Tresters aus der Presse 90C o, Behälter 200 ein bereits vortemperiertes wäßriges Medium vorgelegt, und das dispergierte Material kann durch einen Rührer gut vermischt werden. Das Medium im Extraktionsbehälter 200 wird vorzugsweise auf einen sauren pH-Wert von < 7 und vorzugsweise von < 6 eingestellt. Während die Direktsafterzeugung der ersten Stufe möglichst schnell durchzuführen ist, beispielsweise in einem Zeitraum von maximal 5 Min. und vorzugsweise in einem Zeitraum von wenigen Sekunden bis 3 Min., erfolgt die Tresterextraktion gründlich während einer Dauer von mindestens 2 h. Der zweite Fruchtsaft 130D kann Erzeugnisse unterschiedlicher Qualitäten liefern. Nach der Tresterextraktion ist eine Gewinnung von Klarsaft, nach Filtrierung des aus der Trenneinrichtung 90D kommenden Fruchtsafts, angebracht. Der zweite feste Fruchtrückstand 140C kann als Zellulose-haltiges Material weiter genutzt werden. Die Tresterextraktion kann einstufig oder, nach wahlweiser Rückführung über die Leitung 209E, mit einer weiteren Extraktionsrunde in demselben Extraktionsbehälter 200 oder einem (nicht gezeigten) anderen Extraktionsbehälter durchgeführt werden. Eine weitere vorteilhafte Modifikation wird durch Einbau der oben beschriebenen Zellaufschlußvorrichtung zwischen Extraktionsbehälter 200 und zweiter Trenneinrichtung 90D erhalten. Durch die Kombination von Direktsaftherstellung und Tresterextraktion, wahlweise mit Gewinnung und Nutzung von Biogas, kann eine im wesentlichen rückstandsfreie und abfallfreie Verwertung der aus der Frucht stammenden Naturstoffe unter jeweils optimalen Bedingungen und je nach gewünschtem Produkt mit jeweils optimalen Produktqualitäten erhalten werden.

Fig. 5 zeigt eine andere Ausführungsform, die die Anwendung einer Steuerungseinrichtung 400 zum Zweck einer Regelung vorsieht, daß es beim Betrieb der Anlage zu keinem Stillstand des Materialdurchsatzes kommt. Bei der dargestellten beispielhaften Ausführung der Anlage sind neben der Steuerungseinrichtung 400 eine Zuleitung einer Frucht 110E, ein Fruchtauffang- bzw. Vorratsbehälter 10E, eine Vorzerkleinerungsvorrichtung 30E, eine Mühle 50E zum Bilden einer Fruchtmaische aus der grobzerkleinerten Frucht sowie eine Trennvorrichtung 90E zum Trennen von Fruchtsaft 130E und festem Fruchtrückstand 140E vorgesehen. Selbstverständlich sind Kombinationen mit anderen Ausführungsformen der Erfindung wie oben beschrieben möglich.

Die Steuereinrichtung 400 ist als speicherprogrammierte Steuerung ausgestaltet und empfängt über entsprechende Datenleitungen 410 und 420 jeweils aus dem Bereich der Fruchtzuleitung der Früchte 110E Informationen bzw. Daten über die Härte der jeweils zu verarbeitenden Frucht, wahlweise zusätzlich über die Fruchtart und/oder über weitere Eigenschaften der Frucht, sowie Daten bzw. Informationen über die bei der Maische-Mühle 50E anfallende Menge der gebildeten Maische. Härte der zu verarbeitenden Frucht und die gebildete Menge an Maische haben sich als zwei Hauptfaktoren erwiesen, die den Materialdurchsatz durch das System, beginnend von der Vorzerkleinerungsvorrichtung 30E und bis zur Trennvorrichtung 90E reichend, und die Variabilität des Materialdurchsatzes wesentlich bestimmen. Härte der jeweils zu verarbeitenden Frucht und Menge der gebildeten Maische können über jeweils geeignete Sensoren erfaßt und als Dateninformationen an die Steuerungseinrichtung 400 übermittelt werden. Verwendbare Härtesensoren sind z.B. in WO 9852037, US 5,315,879 und EP 1107000 beschrieben. Durch Rückkopplung über die Steuerungseinrichtung 400 in Abhängigkeit dieser Faktoren an jeweils kritischen Punkten der Anlage kann nun ein stetiger, stillstandsloser Materialdurchsatz gewährleistet werden, wozu die Steuerungseinrichtung im vorliegenden Fall eine Steuerung des Materialdurchsatzes der Vorzerkleinerungsvorrichtung über die elektrische Leitung 430, eine Steuerung der Drehzahl der Mühle 50E über die elektrische Leitung 440, und eine Steuerung des Materialdurchsatzes der Trennvorrichtung 90E über die elektrische Leitung 450 bewirkt. Gezeigt ist eine Regelung an allen drei für den Materialdurchsatz kritischen Einrichtungen, und zwar ohne zusätzliche Pufferreserve oder Puffertank.

Die beschriebenen Ausführungsformen dienen zur Erläuterung der Erfindung und sind nicht einschränkend zu verstehen. Insbesondere kann der Fachmann weitere Modifikationen und Kombinationen bei den beschriebenen Ausführungsformen durchführen. Zum Beispiel können andere Zerkleinerungsvorrichtungen zur Bildung der Maische als die beschriebenen Mühlen, z.B. Thermobreakbehälter mit Temperaturen von um 80°C oder Gefrierzerkleinerer bei Temperaturen von < -5°C, und andere Trenneinrichtung als die beschriebenen Pressen, Zentrifugen oder Dekanter, z.B. Filtrier- oder Extraktionsapparate, verwendet werden. Der Fachmann kann je nach zu verarbeitender Frucht nicht nur die jeweils passenden Einrichtungen, sondern auch weitere Bedingungen der Anlage auswählen. Während die beschriebenen Ausführungsformen insbesondere auf die Gewinnung von naturtrübem Apfelsaft anwendbar ist und in der Stufe der Direktsafterzeugung bei Temperaturen von vorzugsweise unter 20°C und weiter von unter 10°C durchgeführt wird, kann es bei einer anderen Frucht wie z.B. Himbeere, Johannisbeere und Kirschen vorteilhafter sein, erhöhte Temperaturen von z.B. 50°C oder mehr anzuwenden, um die Farbe zu intensivieren. Weitere Anpassungsmöglichkeiten ergeben sich z.B. auch für mögliche Zusätze. Während ein Vorteil der Erfindung gerade darin besteht, daß bei der Direktsafterzeugung Antioxidationsmittel wie Vitamin C nicht mehr zugesetzt werden müssen oder eine Zugabe auf deutlich unter eine unerwünschte Menge von 750 mg Dosis pro Chargeneinheit begrenzt werden kann, können solche oder andere Zusätze je nach Wunsch oder Bedarf verwendet werden.

## Patentansprüche

1. Verfahren zur Herstellung von Frucht- oder Gemüsesaft, das folgende Schritte umfasst:
- Zerkleinern der Frucht zum Bilden einer Fruchtmaische und
- Trennen von Fruchtsaft und festem Fruchtrückstand in einer Trenneinrichtung (90;90B;90D), und
- Auffangen des getrennten Fruchtsafts (130;130A; 130B;130C),
**dadurch gekennzeichnet, dass**
vor dem Zerkleinern der Frucht zum Bilden einer Fruchtmaische eine grobe Vorzerkleinerung der Frucht durchgeführt wird,
wobei die Frucht in 10 Teile oder weniger geteilt wird,
dass eine Inertgas-Zufuhr (31) unmittelbar vor der vorab durchgeführten Grobzerkleinerung der Frucht erfolgt, so daß die grobe Vorzerkleinerung der Frucht und das Zerkleinern der Frucht zur Bildung der Fruchtmaische unter Inertgas durchgeführt werden, und
dass alle Vorrichtungen (30,50,60,90; 50A,60,80A; 50B,300,90B; 50C,60C,90C) zum Vorzerkleinern, Zerkleinern, Trennen und Auffangen in einem gegen Luft abgeschlossenen Rohrleitungssystem (103,104,106,107; 103A,107A; 50C,60C,90C) verbunden sind, und daß wenigstens die Zerkleinerungsvorrichtung (50;50A;50B;50C) unter Vakuum gesetzt ist.

2. Verfahren gemäß Anspruch 1, **dadurch gekennzeichnet, dass** die zu behandelnde Frucht während des gesamten Zeitraums von der Zerkleinerung bis zum Auffangen des getrennten Fruchtsafts durch Inertgaszufuhr unter Schutzgas gesetzt wird.

3. Verfahren gemäß einem der vorangehenden Ansprüche, **dadurch gekennzeichnet, dass** die Fruchtmaische (250) bei einer Unterdruckbehandlung räumlich verteilt wird.

4. Verfahren gemäß einem der vorangehenden Ansprüche, **dadurch gekennzeichnet, dass** eine bei einer Unterdruckbehandlung erhaltene flüchtige Fraktion (235) einer Gaskondensation oder einer Gaswäsche unterzogen wird und danach die aus der flüchtigen Fraktion gewonnenen festen und/oder flüssigen Bestandteile (240) der behandelten Maische (250) wieder zugeführt wird.

5. Verfahren gemäß einem der vorangehenden Ansprüche, **dadurch gekennzeichnet, dass** die Frucht, die zerkleinerte Frucht, die Maische und/oder der abgetrennte Fruchtsaft gekühlt wird.

6. Verfahren gemäß einem der vorangehenden Ansprüche, **dadurch gekennzeichnet, dass** die zu verarbeitende Frucht gewaschen und getrocknet wird.

7. Verfahren gemäß einem der vorangehenden Ansprüche, **dadurch gekennzeichnet, dass** der Stromdurchfluss des Fruchtmaterials von der zerkleinerten Frucht bis zum aufgefangenen Fruchtsaft niemals stillsteht.

8. Anlage zur Herstellung von Frucht- oder Gemüsesaft, mit:
- einer Zerkleinerungsvorrichtung (50;50A;50B;50C) zum Bilden einer Fruchtmaische,
- einer Trennvorrichtung (90;90B;90C) zum Trennen von Fruchtsaft (130;130A;130B;130C) und festem Fruchtrückstand (140;140B;140C),
**dadurch gekennzeichnet, dass** vor der Fruchtmaische-Zerkleinerungsvorrichtung eine Vorzerkleinerungsvorrichtung (30) zum groben Zerteilen der Frucht auf 10 oder weniger Teile angeordnet ist, wobei die Vorzerkleinerungsvorrichtung eine Inertgaszuleitung (31) zum Bilden eines das Fruchtmaterial umgebenden Schutzgases aufweist,
dass Vorzerkleinerungsvorrichtung (30), Zerkleinerungsvorrichtung (50;50A;50B;50C) und Trennvorrichtung (90;90B;90C) in einem gegenüber Außenluft abgeschlossenen System verbunden sind,
und dass zwischen der Fruchtmaische-Zerkleinerungsvorrichtung und der Trennvorrichtung eine Evakuierungsvorrichtung (60,70;60A,70A;60C,70C) angeordnet ist.

9. Anlage gemäß Anspruch 8, **dadurch gekennzeichnet, dass** die Evakuierungsvorrichtung (60,70; 60A,70A;60C,70C) einen Verteiler (65) zum Verteilen der Maische aufweist.

10. Anlage gemäß einem der Ansprüche 8 bis 9, **dadurch gekennzeichnet, dass** sie eine Evakuierungsvorrichtung mit einem Fallturm (60;60A) aufweist, in dem die Maische (250) unter einer Unterdruckatmosphäre abwärts fällt.

11. Anlage gemäß einem der Ansprüche 8 bis 10, **dadurch gekennzeichnet, dass** die Evakuierungsvorrichtung (60A,70A) mit einem Gaskondensator (75,76) oder einer Gaswaschvorrichtung zum Auffangen von fester und/oder flüssiger Fraktion (240) aus einer durch Evakuierung erzeugten flüchtigen Fraktion (235) verbunden ist, und dass der Gaskondensator (75,76) oder die Gaswaschvorrichtung mit dem Zulauf der Trennvorrichtung verbunden ist (236,80A,107A), um die aufgefangen festen und/oder flüssigen Bestandteile (240) der flüchtigen Fraktion (235) wieder der behandelten Maische (250) zuzuführen.

12. Anlage gemäß einem der Ansprüche 8 bis 11, **dadurch gekennzeichnet, dass** sie mindestens eine Kühleinrichtung (25) aufweist, um die Frucht, die zerkleinerte Frucht, die Maische und/oder den abgetrennten Fruchtsaft zu kühlen.

13. Anlage gemäß einem der Ansprüche 8 bis 12, **dadurch gekennzeichnet, dass** sie ferner eine Waschanlage (20) zum Waschen und Trocknen der zu behandelnden Frucht aufweist.

14. Verwendung eines Verfahrens gemäß einem der Ansprüche 1 bis 7 oder einer Anlage gemäß einem der Ansprüche 8 bis 13 zur Herstellung von naturtrübem Apfelsaft.

## Claims

1. A process for producing fruit juice or vegetable juice comprising the following steps
- crushing fruit to form a fruit mash and
- separating fruit juice and solid fruit residue in a separation device (90; 90B; 90D) and
- collecting the separated fruit juice (130; 130A; 130B; 130C)
**characterized in that**, in advance of the fruit crushing to form a fruit mash, a rough pre-crushing of fruit is carried out, wherein the fruit is split up to 10 or less parts,
**in that** an inert gas supply (31) takes place immediately before the advance rough pre-crushing of fruit, so that the rough pre-crushing of fruit and the crushing fruit to form the fruit mash are performed under inert gas, and
**in that** all devices (30, 50, 60, 90; 50A, 60, 80A, 50B, 300, 90B; 50C, 60C, 90C) for the pre-crushing, the crushing, the separating and the collecting are connected in an air sealed pipe system (103, 104, 106, 107, 103A, 107A; 50C, 60C, 90C), and **in that** at least the crushing device (50; 50A; 50B; 50C) is put under low pressure.

2. The process according to claim 1, **characterized in that** the fruit to be treated is put under protective gas by supplying inert gas during the whole period of time from the crushing to the collecting of the separated juice.

3. The process according to any one of the preceding claims, **characterized in that** the fruit mash (250) is spatially dispersed during a low pressure treatment.

4. The process according to any one of the preceding claims, **characterized in that** a volatile fraction (235) obtained during a low pressure treatment is subjected to gas condensation or gas scrubbing, and that thereafter solid and/or liquid components (240) obtained from the volatile fraction are re-supplied to the treated mash (250).

5. The process according to any one of the preceding claims, **characterized in that** the fruit, the crushed fruit, the mash and/or the separated juice is being cooled.

6. The process according to any one of the preceding claims, **characterized in that** the fruit to be processed is washed and dried.

7. The process according to any one of the preceding claims, **characterized in that** the flow of fruit material from crushed fruit to collected juice never stands still.

8. An apparatus for producing fruit juice or vegetable juice, including:
- a crushing device (50; 50A; 50B; 50C) to form fruit mash,
- a separation device (90; 90B; 90C) for separation of fruit juice (130; 130A; 130B; 130C) and solid fruit residue (140; 140B; 140C),
**characterized in that** a pre-crushing device (30) for rough crushing of fruit into 10 or less parts is arranged in front of the fruit mash crushing device, wherein the pre-crushing device comprises an inert gas supply (31) for forming protective gas surrounding the fruit material,
**in that** the pre-crushing device (30), the crushing device (50; 50A; 50B; 50C) and the separating device (90; 90B; 90C) are connected in a system sealed to outside air, and **in that** an evacuation device (60, 70; 60A, 70A; 60C, 70C) is arranged between the fruit mash crushing device and the separating device.

9. The apparatus according to claim 8, **characterized in that** the evacuation device (60, 70; 60A, 70A; 60C, 70C) comprises a distributor (65) for dispersing mash.

10. The apparatus according to any one of claims 8 to 9, **characterized in that** it comprises an evacuation device with a drop tower (60; 60A), in which the mash (250) drops downwards in low pressure atmosphere.

11. The apparatus according to any one of claims 8 to 10, **characterized in that** the evacuation device (60A, 70A) is connected to a gas condenser (75, 76) or a gas scrubbing device for collecting a solid and/or liquid fraction (240) from a volatile fraction (235) being formed by evacuation, and **in that** the gas condenser (75, 76) or the gas scrubbing device is connected with the inlet of the separation device (236, 80A, 107A) in order to re-introduce the collected solid or liquid components (240) of the volatile fraction (235) to the treated mash (250).

12. The apparatus according to any one of claims 8 to 11, **characterized in that** it comprises at least one cooling device (25) in order to cool the fruit, the crushed fruit, the mash and/or the separated juice.

13. The apparatus according to any one of claims 8 to 12, **characterized in that** it further comprises a washing facility (20) to wash and dry fruit to be treated.

14. Use of a process according to any one of claims 1 to 7 or of an apparatus according to any one of claims 8 to 13 for the preparation of natural unfiltered apple juice.

## Revendications

1. Procédé pour la fabrication d'un jus de fruit ou de légume, comprenant les étapes suivantes :
- le broyage des fruits pour former une purée de fruits et
- la séparation du jus de fruit des résidus de fruit solides dans une installation de séparation (90, 90B, 90D), et
- la collecte du jus de fruit séparé (130 ; 130A ; 130B : 130C)
**caractérisé en ce qu'**on réalise, avant le broyage du fruit pour former une purée de fruit, un pré-broyage brut du fruit, où le fruit est coupé en 10 ou en de plus petites parties,
et **en ce qu'**une alimentation en gaz inerte (31) a lieu directement avant le pré-broyage du fruit pour que le pré-broyage grossier du fruit et le broyage du fruit pour la réalisation de la purée de fruit se déroule sous un gaz inerte,
et **en ce que** toutes les installations (30, 50, 60, 90 ; 60, 80A ; 50B, 300, 90B ; 50C, 60C, 90C) pour le pré-broyage, le broyage, la séparation et la collecte (103, 104, 106, 107 ; 103A, 107A, ; 50C, 60C, 90C) sont reliées dans un système de tuyauterie (103, 104, 106, 107 ; 103A ; 107A ; 50C, 60C, 90C) étanche à l'air et qu'au moins l'installation de broyage (50 ; 50A ;50B ; 50C) est mise sous vide.

2. Procédé selon la revendication 1, **caractérisé en ce que** le fruit à traiter est mis sous un gaz de protection par l'alimentation d'un gaz inerte pendant toute la durée du broyage jusqu'à la collecte du jus de fruit séparé.

3. Procédé selon une des revendications précédentes, **caractérisé en ce que** la purée de fruit (250) soit repartie dans l'espace lors d'un traitement sous pression.

4. Procédé selon une des revendications précédentes, **caractérisé en ce qu'**une fraction (235) volatile obtenue par un traitement sous pression est soumise à une condensation gazeuse ou à une épuration par gaz, puis le composant (240) solide et/ou liquide obtenu à partir de la fraction volatile est de nouveau amené à la purée à traiter.

5. Procédé selon une des revendications précédentes, **caractérisé en ce que** le fruit, le fruit broyé, la purée et/ou le jus de fruit séparé sont refroidis.

6. Procédé selon une des revendications précédentes, caractérisé en ce le fruit à traiter est lavé et séché.

7. Procédé selon une des revendications précédentes, **caractérisé en ce que** le passage des fruits ne s'arrête jamais depuis le broyage du fruit jusqu'à la récolte du jus de fruit.

8. Installation pour la fabrication d'un jus de fruit ou de légume présentant :
- un dispositif de broyage (50; 50A; 50B; 50C) pour la réalisation d'une purée de fruit,
- un dispositif de séparation (90, 90B, 90C) pour la séparation du jus de fruit (130; 130A; 130B; 130C) et les résidus de fruit solides (140; 140B; 140C),
**caractérisée en ce qu'**un dispositif de pré-broyage (30) est disposé devant le dispositif de broyage de la purée de fruit pour réaliser un broyage grossier du fruit en 10 ou en de plus petites parties,
où le dispositif de pré-broyage présente une alimentation en gaz inerte (31) pour la formation d'un gaz de protection entourant le fruit,
**caractérisée en ce que** le dispositif de pré-broyage (30), le dispositif de broyage (50; 50A; 50B; 50C) et le dispositif de séparation (90, 90B, 90C) sont reliés entre eu dans un système fermé, étanche à l'air, et **caractérisée en ce qu'**entre le dispositif de broyage de la purée de fruit et le dispositif de séparation, on a disposé un dispositif d'évacuation (60, 70, 60A, 70A, 60C, 70C).

9. Installation selon la revendication 8, **caractérisée en ce que** le dispositif d'évacuation (60, 70, 60A, 70A, 60C, 70C) présente un distributeur (65) pour distribuer la purée.

10. Installation selon les revendications 8 à 9, **caractérisée en ce qu'**elle présente un dispositif d'évacuation avec une tour de chute (60, 60A) dans laquelle la purée (250) tombe vers le bas sous une atmosphère de sous-pression.

11. Installation selon les revendications 8 à 10, **caractérisée en ce que** le dispositif d'évacuation (60A, 70A) est reliée avec un condensateur de gaz (75, 76) ou un dispositif de lavage de gaz pour récolter la partie (240) solide et/ou liquide à partir d'une fraction (235) volatile, produite par l'évacuation et **caractérisée en ce que** le condensateur de gaz (75, 76) ou le dispositif de lavage de gaz est relié avec l'entrée du dispositif de séparation (236, 80A, 107A) pour réintroduire les composants solides et/ou liquides récoltés de la fraction volatile (235), à nouveau vers la purée de fuit à traiter.

12. Installation selon une des revendications 8 à 11, **caractérisée en ce qu'**elle présente au moins un dispositif de refroidissement (25) pour refroidir le fruit, le fruit broyé, la purée et/ou le jus de fruit séparé.

13. Installation selon une des revendications 8 à 12, **caractérisée en ce qu'**elle présente, en outre, un dispositif de lavage (20) pour laver et sécher le fruit à traiter.

14. Utilisation d'un procédé selon une des revendications 1 à 7, ou selon une installation selon une des revendications 8 à 13 pour la fabrication d'un jus de pomme naturel.
